# EUROPÄISCHE PATENTSCHRIFT

(11) **EP 0 932 471 B1**
(45) Veröffentlichungstag und Bekanntmachung des Hinweises auf die Patenterteilung: **14.08.2002**
(21) Anmeldenummer: 97912143.1
(22) Anmeldetag: 08.10.1997
(51) Int. Cl.: B23K 1/00

(54) **VERFAHREN ZUR HERSTELLUNG EINES GELÖTETEN METALLISCHEN WABENKÖRPERS**
METHOD FOR PRODUCING A SOLDERED METAL HONEYCOMB BODY
PROCEDE DE PRODUCTION D'UN CORPS A NID D'ABEILLES METALLIQUE BRASE

(30) Priorität: 17.10.1996 DE 19642946
(43) Veröffentlichungstag der Anmeldung: 04.08.1999
(73) Patentinhaber: Emitec Gesellschaft für Emissionstechnologie mbH, 53797 Lohmar (DE)
(72) Erfinder: WIERES, Ludwig, D-51491 Overath (DE); KURTH, Ferdi, D-50939 Köln (DE)
(74) Vertreter: Kahlhöfer, Hermann, Dipl.-Phys.
(86) Internationale Anmeldenummer: EP9705540
(87) Internationale Veröffentlichungsnummer: WO9817431

(56) Entgegenhaltungen:
- EP-A- 0 562 116
- WO-A-93/25339
- WO-A-94/06594

## Beschreibung

Die vorliegende Erfindung betrifft ein Verfahren zum Herstellen eines metallischen Wabenkörpers gemäß Oberbegriff des Anspruchs 1, insbesondere für Abgaskatalysatoren von Kraftfahrzeugen, der aus zumindest teilweise strukturierten Blechlagen gewickelt, geschichtet oder geschlungen und zumindest in Teilbereichen verlötet ist.

Zur katalytischen Umsetzung von Abgasen in Abgasanlagen von Kraftfahrzeugen mit Verbrennungsmotor, werden metallische Wabenkörper verwendet, die als Träger für ein katalytisch aktives Material dienen. Für die Haltbarkeit solcher Katalysator-Trägerkörper sowie für die Eigenschaften von ähnlichen Wabenkörpern in anderen Einsatzgebieten ist es mitentscheidend, daß die einzelnen Blechlagen, aus denen diese Körper bestehen, durch hochwertige Lötverbindungen, zumindest in Teilbereichen, miteinander verbunden sind. Es ist bekannt, daß solche Wabenkörper aus Hochtemperaturkorrosionsfesten Stahlblechen bestehen und im Hochtemperaturvakuum gelötet werden.

Derartige Wabenkörper sind beispielsweise in der DE 23 02 746 A1 oder der DE 29 24 592 A1 beschrieben. Aus diesen Druckschriften sind auch Verfahren zum Beloten der Wabenkörper bekannt.

Desweiteren ist durch die EP 0 049 489 B2 ein Verfahren zum Beleimen und Beloten metallischer Wabenkörper bekannt, das ein Aufbringen geringer Mengen von Lot ermöglicht. Ferner ist in der DE 38 18 512 A1 ein Verfahren zum Beleimen und Beloten von solchen Trägern beschrieben. Diese Druckschrift enthält auch eine Übersicht über bekannte Belotungsverfahren. Zu den bekannten Belotungsverfahren gehört auch das in der EP 0136 514 A1 beschriebene trockene Beloten von Wabenkörpern, bei dem Lotpulver durch Oberflächenkräfte und mechanische Verklemmung an den Blechlagen gehalten wird.

Desweiteren ist durch die WO93/25339 ein Verfahren zum Herstellen eines metallischen Wabenkörpers bekannt, bei dem zumindest die strukturierten Blechlagen des Wabenkörpers mit einer dünnen Schicht eines Walzöls versehen werden, sofern diese nicht schon vom Herstellungsprozeß vorhanden ist. Das Walzöl wird anschließend einer thermischen Behandlung unterzogen, wodurch die leicht flüchtigen Bestandteile des Walzöls entfernt werden. Die verbleibenden Reste des Walzöls werden in Kontakt mit einer stark verdünnten wässrigen Lösung eines Tensids gebracht, wodurch sich eine Schicht ausbildet, die nach dem Entfernen des Wassers durch Trocknung eine optimale Voraussetzung für das Aufbringen von Lotpulver bildet.

Das oben genannte Verfahren zum Herstellen eines metallischen Wabenkörpers, der aus zumindest teilweise strukturierten Blechlagen gewickelt, geschichtet oder geschlungen ist, bei dem wenigstens die strukturierten Blechlagen mit einer Schicht aus Walzöl versehen werden, sofern diese nicht bereits vom Herstellungsprozeß der Blechlagen vorhanden ist, zeichnet sich dadurch aus, daß der aus den Blechlagen hergestellte Wabenkörper mit einem Lotpulver in Kontakt gebracht wird, das an dem Walzöl haften bleibt, und der Wabenkörper einem Lötvorgang unterzogen wird. Eine solche Verfahrensführung ist besonders wirtschaftlich, da auf eine vollständige thermische und chemische Behandlung des Walzöls sowie auf eine Trocknung verzichtet wird. Überraschenderweise hat sich herausgestellt, daß der Lötvorgang mit einer verbesserten Lötstärke durchführbar ist, wenn das Lotpulver direkt an dem Walzöl anhaftet. Bei dem Walzöl handelt es sich vorzugsweise um ein handelsübliches Walzöl, welches Mineralstoffe, Fettstoffe und Hilfsstoffe enthält. Beim Wickeln eines Wabenkörpers aus Blechlagen entstehen typische Berührungslinien zwischen den Blechlagen, in deren Nähe sich das Walzöl durch Kapilarkräfte ansammelt. Daher bleibt auch gerade in diesen Bereichen beim Kontakt mit Lotpulver mehr Lot hängen, wo es für die Verbindung auch gebraucht wird.

Hiervon ausgehend liegt der vorliegenden Erfindung die Aufgabe zugrunde, ein Verfahren zum Herstellen eines Wabenkörpers anzugeben, welches wirtschaftlicher durchführbar ist. Ein weiteres Ziel ist es, die Lötstärke zu verbessern.

Um die Verteilung des Lotes bei der Belotung zusätzlich günstig zu beeinflussen, soll eine teilweise thermische Entfettung durch Aufheizen des Wabenkörpers durch ein verfahren gemäß Anspruch 1 erfolgen, wobei jedoch Temperatur und Zeit der Aufheizung so gewählt werden sollten, daß nur die leichtflüchtigen Bestandteile entfernt werden und insbesondere in der Nähe der Berührungslinien noch genügend Walszölreste übrigbleiben. Dadurch bleibt beim Kontakt mit Lötpulver nur noch wenig Lot an den freien Flächen im Wabenkörper hängen, jedoch viel Lot im Bereich der Berührungslinien, was gerade erwünscht ist.

Das Walzöl trocknet auch unter normalen Umgebungsbedingungen nicht, so daß die Wabenkörper noch lange Zeit transportiert und Stößen ausgesetzt werden können, ohne daß das Lotpulver herausrieselt.

Vorzugsweise wird das Lotpulver wenigstens stirnseitig am Wabenkörper aufgebracht. Die Aufbringung des Lotpulvers kann dadurch erfolgen, daß der Wabenkörper in eine Ansammlung von Lotpulver in einem Wirbelbett getaucht wird. In Abhängigkeit von der Eintauchtiefe des Wabenkörpers in das Wirbelbett kann der Lotauftrag in axialer Richtung des Wabenkörpers unterschiedlich sein.

Bei einer anderen Ausführungsform, insbesondere für dickwandigere Wabenkörper, wird der Wabenkörper über seine gesamte Länge mit Lotpulver beschichtet. Typischerweise werden Nickelbasislote verwendet. Der mittlere Durchmesser eines Lotpulvers ist vorzugsweise größer als 60 µm, wobei das Lotpulver eine Mindestkorngröße von 40 µm hat.

Ein wichtiger Aspekt der Erfindung ist auch darin zu sehen, daß während des Lötvorgangs der Wabenkörper liegend mit offenen seitlichen Stirnseiten angeordnet ist. Durch die liegende Anordnung des Wabenkörpers während eines Lötvorgangs wird sichergestellt, daß das Lotmaterial aufgrund der sich verändernden Viskosität des Walzöls und bei dessen Verdampfen bei einer Temperaturerhöhung nicht aus dem Wabenkörper herausrieselt. Durch die seitlich offenen Stirnseiten ist eine Evakuierung und/oder eine Beaufschlagung mit Schutzgas besonders effizient möglich.

Nach einer weiteren vorteilhaften Ausgestaltung des Verfahrens wird vorgeschlagen, daß die Blechlagen eine Dicke von mindestens 60 µm, insbesondere mindestens 80 µm, vorzugsweise mindestens 110 µm, aufweisen. Hierbei handelt es sich um Blechlagen, deren Dicke größer ist als bei den bekannten Blechlagen eines Wabenkörpers. Bei dickeren Blechlagen verringert sich der Einfluß der Legierungsbildung der Blechlage mit dem Lot. Vorzugsweise wird das Verfahren bei einem Wabenkörper mit einem Durchmesser von maximal 90 mm, vorzugsweise von maximal 70 mm durchgeführt, wodurch sichergestellt wird, daß bei einer liegenden Anordnung der Wabenkörper während des Lötvorgangs keine Veränderung der Rundheit des Wabenkörpers beim Löten eintritt. Hierbei wird davon ausgegangen, daß das den Wabenkörper umgebende Gehäuse, insbesondere ein Mantelrohr, eine übliche Materialstärke aufweist. Bei der erfindungsgemäßen Verfahrensführung wird eine hohe Lotaufnahme erreicht. Der Lotabfall während des Verfahrens ist relativ gering. Durch die hohe Lotaufnahme erfolgt auch eine starke Belotung im Verbindungsbereich, wodurch eine ausgeprägte Anbindung der Blechlagen erzielt wird. Das Verfahren ist allerdings auch auf sehr dünne Bleche und sehr feine Korngrößen des Lotpulvers anwendbar.

Erfindungsgemäß läßt sich bevorzugt ein Wabenkörper herstellen, der aus zumindest teilweise strukturierten Blechlagen gewickelt, geschichtet oder geschlungen ist, wobei wenigstens die strukturierten Blechlagen mit einer Schicht aus Walzöl versehen werden, sofern diese nicht bereits vom Herstellungsprozeß der Blechlagen vorhanden ist, wobei der aus den Blechlagen hergestellte Wabenkörper mit einem Lotpulver in Kontakt gebracht wird, das an dem Walzöl haften bleibt, und der Wabenkörper einem Lötvorgang unterzogen wird. Bevorzugt und besonders wirtschaftlich sind so Wabenkörper herstellbar, die Blechlagen mit einer Mindestdicke von 60 µm, vorzugsweise von 80 µm, insbesondere von 110 µm aufweisen. Der Durchmesser solcher Wabenkörpers beträgt dabei insbesondere maximal 90 mm, vorzugsweise maximal 70 mm. Ein solcher Wabenkörper ist insbesondere als Katalysatorträger für Zweiradfahrzeuge geeignet.

Weitere Merkmale und Vorteile des Verfahrens sowie eines danach hergestellten metallischen Wabenkörpers werden anhand der Zeichnung erläutert.

Es zeigen:
- Fig. 1: einen teilweise fertiggewickelten Wabenkörper,
- Fig. 2: einen Ausschnitt aus einem Querschnitt durch einen solchen Wabenkörper.

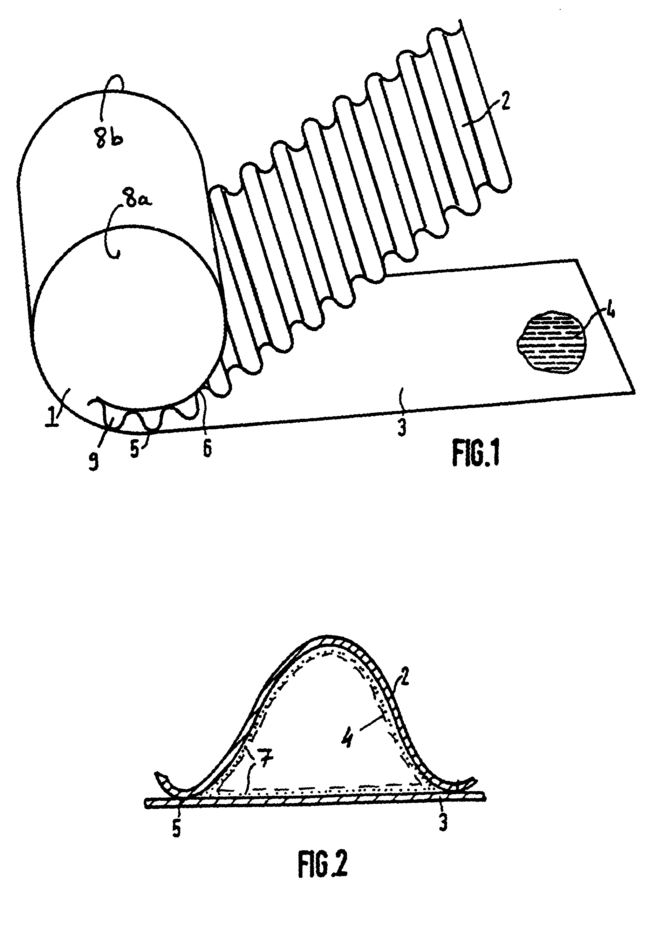

Fig. 1 zeigt schematisch den Aufbau eines Wabenkörpers 1, wie er insbesondere als Abgaskatalysator-Trägerkörper eingesetzt wird. Ein gewelltes Blech 2 und ein glattes Blech 3 werden zu einem spiraligen Körper aufgewickelt, wobei typische Berührungsstellen 5, 6 zwischen den Blechlagen 2, 3 entstehen. Die Oberfläche des gewellten Blechs 2 und/oder des glatten Bleches 3 ist mit einer Schicht Walzöl bedeckt. Der fertig gewickelte Wabenkörper 1 weist eine erste 8a und eine zweite 8b Stirnseite auf, die durch Kanäle 9 miteinender verbunden sind. Er wird einem Belotungsvorgang unterzogen, währenddessen Lotpulver 7 in den Wabenkörper eingebracht wird. Bei dem Lotpulver 7 handelt es sich vorzugsweise um ein Groblot mit einem Teilchendurchmesser > 60 µm insbesondere mit einem mittleren Teilchendurchmesser > 63 µm. Die einzelnen Lotpartikel bleiben am Walzöl haften. Der so mit einem Lotpulver beschichtete Wabenkörper wird anschließend einem Lötvorgang unterzogen.

Die Aufbringung des Lotpulvers kann beispielsweise mittels eines Wirbelbetts erfolgen, wie dies bespielsweise in der WO93/25339 beschrieben ist.

Fig. 2 zeigt schematisch einen Ausschnitt aus einem Querschnitt durch einen Wabenkörper 1 mit typischen Berührungsstellen zwischen einem gewellten Blech 2 und einem glatten Blech 3. Das gewellte Blech 2 und das glatte Blech 3 weisen eine Walzölschicht 4 auf in der Lotpulver 7 enthalten ist. Das Lotpulver 7 haftet an und in der Walzölschicht 4, ohne daß weitere Behandlungsschritte wie z.B. Fixierung notwendig sind.

## Patentansprüche

1. Verfahren zum Herstellen eines metallischen Wabenkörpers (1) mit von einer ersten Stirnseite (8a) zu einer zweiten Stirnseite (8b) verlaufenden Kanälen (9), der aus zumindest teilweise strukturierten Blechlagen (2, 3) gewickelt, geschichtet oder geschlungen ist, bei dem wenigstens die strukturierten Blechlagen (2) mit einer Schicht aus Walzöl (4) versehen werden, sofern diese nicht bereits vom Herstellungsprozeß der Blechlagen (2) vorhanden ist, wobei der aus den Blechlagen (2, 3) hergestellte Wabenkörper (1) mit einem Lotpulver (7) in Kontakt gebracht wird, das an dem Walzöl (4) haften bleibt, und der Wabenkörper (1) einem Lötvorgang unterzogen wird,
**dadurch gekennzeichnet, daß** der Wabenkörper (1) kurzzeitig erwärmt wird, vorzugsweise auf eine Temperatur von 100 bis 200° C, wobei jedoch Temperatur und Zeit der Aufheizung so gewähltwerden daß nur die leicht flüchtige Bestandteile des Walzöls (4) auf frei liegenden Flächen entfernt werden.

2. Verfahren nach Anspruch 1, bei dem das Lotpulver (7) wenigstens an einer der Stirnseiten (8a, 8b) des Wabenkörpers (1) aufgebracht wird.

3. Verfahren nach Anspruch 2, bei dem das Lotpulver (7) über die gesamte Länge des Wabenkörpers (1) aufgebracht wird.

4. Verfahren nach einem der vorhergehenden Ansprüche, bei dem während des Lötvorgangs der Wabenkörper (1) liegend mit seitlich freien Stirnseiten angeordnet ist.

5. Verfahren nach einem der vorhergehenden Ansprüche, bei dem die Blechlagen (2, 3) eine Dicke von mindestens 60 µm, insbesondere mindestens 80 µm, vorzugsweise mindestens 110 µm, aufweisen.

6. Verfahren nach einem der vorhergehenden Ansprüche, bei zumindest teilweise strukturierten Blechlagen (2, 3) zu einem Wabenkörper (1) mit einem Durchmesser von maximal 90 mm, vorzugsweise von maximal 70 mm, gewickelt, geschichtet oder geschlungen sind.

7. Verfahren nach einem der vorhergehenden Ansprüche, bei dem das Lotpulver eine Korngröße von mindestens 40 µm und eine mittlere Korngröße von > 60 µm, insbesondere 63 µm, aufweist.

8. Verfahren nach einem der vorhergehenden Ansprüche, bei dem der Lötvorgang im Vakuum stattfindet.

9. Verfahren nach einem der Ansprüche 1 bis 8, bei dem der Lötvorgang unter Schutzgas, insbesondere Argon oder Stickstoff, stattfindet.

## Claims

1. Method for manufacturing a metallic honeycomb body (1) with channels (9) running from a first end face (8a) to a second end face (8b) which is wound, layered or looped from at least partially structured sheet metal layers (2, 3), in which at least the structured sheet metal layers (2) are provided with a layer of rolling oil (4) to the extent that this is not already present in the process of manufacturing the sheet metal layers (2), wherein the honeycomb body (1) manufactured from the sheet metal layers (2, 3) is brought into contact with a brazing powder (7) which adheres to the rolling oil (4) and the honeycomb body (1) is subjected to a brazing procedure, **characterized in that** the honeycomb body (1) is briefly heated, preferably to a temperature of 100° to 200°C, the temperature and the time for heating-up however being chosen in the way that only the volatile components of the rolling oil (4) are removed on uncovered surfaces.

2. Method according to claim 1, in which the brazing powder (7) is applied to at least one of the end faces (8a, 8b) of the honeycomb body (1).

3. Method according to claim 2, in which the brazing powder (7) is applied over the entire length of the honeycomb body (1).

4. Method according to one of the preceding claims, in which during the brazing procedure the honeycomb body (1) is arranged lying down with end faces laterally free.

5. Method according to one of the preceding claims, in which the sheet metal layers (2, 3) have a thickness of at least 60 µm, in particular at least 80 µm, preferably at least 110 µm.

6. Method according to one of the preceding claims, in which at least partially structured sheet metal layers (2, 3) are wound, layered or looped into a honeycomb body (1) with a maximum diameter of 90 mm, preferably a maximum of 70 mm.

7. Method according to one of the preceding claims, in which the brazing powder has a grain size of at least 40 µm and an average grain size of >60 µm, in particular 63 µm.

8. Method according to one of the preceding claims, in which the brazing procedure takes place in a vacuum.

9. Method according to one of claims 1 to 8, in which the brazing procedure takes place in inert gas, in particular argon or nitrogen.

## Revendications

1. Procédé de fabrication d'un corps en nid d'abeilles métallique(1) comportant des canaux (9) s'étendant d'une première face frontale (8a) jusqu'à une deuxième face frontale (8b), ledit corps en nid d'abeilles métallique (1) étant enroulé, empilé ou entre-enroulé à partir de tôles (2, 3) au moins partiellement structurées, dans le cas duquel au moins les couches de tôles (2) structurées sont munies d'une couche d'huile de laminage (4), à moins que celle-ci ne soit pas déjà présente depuis le procès de fabrication des couches de tôles (2), le corps en nid d'abeilles (1) fabriqué à partir des couches de tôles (2, 3) étant mis en contact avec une poudre à braser (7), qui adhère à l'huile de laminage (4), et le corps en nid d'abeilles (1) étant soumis à une opération de brasage, **caractérisé en ce que** le corps en nid d'abeilles (1) est chauffé à bref délai, de préférence à une température de 100 à 200°C, la température et le temps de chauffage étant cependant choisis de telle manière qu'uniquement les composés volatiles de l'huile de laminage (4) sont éliminés sur des surfaces non recouvertes.

2. Procédé selon la revendication 1, dans le cas duquel la poudre à braser (7) est appliquée sur au moins une des faces frontales (8a, 8b) du corps en nid d'abeilles (1).

3. Procédé selon la revendication 2, dans le cas duquel la poudre à braser (7) est appliquée sur la longueur totale du corps en nid d'abeilles (1).

4. Procédé selon l'une des revendications précédentes, dans le cas duquel durant l'opération de brasage le corps en nid d'abeilles (1) est agencé de manière couchée avec des faces frontales latéralement libres.

5. Procédé selon l'une des revendications précédentes, dans le cas duquel les couches de tôles (2, 3) présentent une épaisseur d'au moins 60 µm, notamment d'au moins 80 µm, de préférence d'au moins 110 µm.

6. Procédé selon l'une des revendications précédentes, dans le cas duquel des couches de tôles (2, 3) au moins partiellement structurées sont enroulées, empilées ou entre-enroulées en un corps en nid d'abeilles (1) avec un diamètre d'au maximum 90 mm, de préférence d'au maximum 70 mm.

7. Procédé selon l'une des revendications précédentes, dans le cas duquel la poudre à braser a une dimension des grains d'au moins 40 µm et une dimension moyenne des grains de > 60 µm, notamment de 63 µm.

8. Procédé selon l'une des revendications précédentes, dans le cas duquel l'opération de brasage est effectuée dans le vide.

9. Procédé selon l'une des revendications 1 à 8, dans le cas duquel l'opération de brasage est effectuée sous un gaz protecteur, notamment sous de l'argon ou de l'azote.
